# EUROPÄISCHE PATENTANMELDUNG

(11) **EP 4 821 658 A1**
(43) Veröffentlichungstag der Anmeldung: **14.10.2026**
(21) Anmeldenummer: 26170263.3
(22) Anmeldetag: 01.04.2026
(51) Int. Cl.: B29C 55/06

(54) **LÄNGSRECKANLAGE MIT LÄNGSRECKMODUL**

(30) Priorität: 09.04.2025 DE 102025114007
(71) Anmelder: Brückner Maschinenbau GmbH, 83313 Siegsdorf (DE)
(72) Erfinder: EDFELDER, Anton, 83246 Unterwössen (DE); Adler, Jens, 83313 Siegsdorf (DE); Winkler, Felix, 83059 Kolbermoor (DE); GIAPOULIS, Anthimos, 83278 Traunstein (DE); Mitterer, Thomas, 83376 Truchtlaching (DE)
(74) Vertreter: Flach Bauer & Partner Patentanwälte mbB

(57) **Zusammenfassung**

Die vorliegende Erfindung betrifft eine Längsreckanlage 10 zum Verstrecken einer Kunststofffolie 1 in Längsrichtung M. Die Längsreckanlage 10 umfasst einen Folieneinlauf 11 und einen Folienauslass 15 sowie zumindest einen Reckbereich 13. Der Reckbereich 13 ist zwischen dem Folieneinlauf 11 und dem Folienauslass 15 angeordnet und umfasst zumindest eine Längsreckmodulaufnahme 20. Weiterhin umfasst die Längsreckanlage 10 zumindest ein erstes Längsreckmodul 100 und ein zweites Längsreckmodul 200, wobei die Längsreckmodule 100, 200 jeweils in die Längsreckmodulaufnahme 20 einsetzbar und gegeneinander austauschbar sind. Das erste Längsreckmodul sowie das zweite Längsreckmodul umfassen Reckwalzen, die je zumindest einen Reckspalt definieren. Das erste Längsreckmodul unterscheidet sich von dem zweiten Längsreckmodul in der Anzahl der Reckspalte, in einer Oberfläche zumindest einer Reckwalze und/oder in einer Geometrie zumindest einer Reckwalze.

## Beschreibung

### Gebiet der Erfindung

Die Erfindung betrifft eine modulare Längsreckanlage zum Verstrecken einer Kunststofffolie, eine Anlage zur Herstellung einer Kunststofffolie, umfassend zumindest eine modulare Längsreckanlage sowie ein Verfahren zum Verstrecken einer Kunststofffolie.

### Hintergrund

Kunststofffolien, wie beispielsweise Verpackungsfolien sind typischerweise in zumindest einer Richtung (monoaxial) oder in beiden Richtungen (biaxial) verstreckt. Dies bedeutet, dass die Kunststofffolie nach der Extrusion in ihrer Längsrichtung und/oder Querrichtung verstreckt wird. Hierdurch können sehr dünne Kunststofffolien hergestellt werden und/oder die mechanischen Eigenschaften der Kunststofffolie können eingestellt bzw. verbessert werden.

Zur Verstreckung in Längsrichtung wird die Kunststofffolie typischerweise über sogenannte Reckwalzen geführt, die einen Reckspalt zwischen sich definieren. Eine erste Reckwalze, die vor dem Reckspalt angeordnet ist, hat eine erste Rotationsgeschwindigkeit. Eine zweite Reckwalze, die nach dem Reckspalt angeordnet ist, hat eine zweite, höhere Rotationsgeschwindigkeit. Die unterschiedlichen Rotationsgeschwindigkeiten führen zu einer Längsstreckung der Kunststofffolie im Reckspalt.

Je nach Art der Kunststofffolie und der gewünschten Kunststofffoliendicke kann es notwendig sein, mehrere Reckschritte in Längsrichtung vorzusehen. Beispielsweise können Kunststofffolien, wie PET-Folien, mit einer finalen Dicke von etwa 30 µm in drei aufeinander folgenden Reckschritten in Längsrichtung verstreckt werden. In diesem Fall wären also drei Reckspalte vorzusehen.

Die Herstellung dickerer Kunststofffolien, mit einer Kunststofffoliendicke von beispielsweise 100 µm, kann hingegen nur einen Reckschritt erfordern. Mithin ist ein Reckspalt ausreichend.

Wie diese Beispiele zeigen, gibt es verschiedene, anwendungsspezifische Verfahren zur Herstellung von längsverstreckten oder biaxial verstreckten Kunststofffolien, die sich beispielsweise durch die Zahl der Reckschritte unterscheiden. Andere Parameter, wie die Temperatur, insbesondere die Temperatur der Reckwalzen, oder die Art der Oberfläche bzw. der Oberflächenbeschichtung der Reckwalzen beim Verstrecken der Kunststofffolie können ebenso anwendungsspezifisch variieren. Unterschiedliche Oberflächen führen zu unterschiedlichen Klebepunkten, Abriebsfestigkeiten und/oder Wärmeleitfähigkeiten, welche die Qualität der Kunststofffolie beeinflussen. Ebenfalls kann die benötigte Reckkraft, z.B. aufgrund des Materials der Kunststofffolie, aufgrund der Kunststofffoliendicke, und/oder aufgrund des gewünschten Reckverhältnisses, variieren. Je nach benötigter Reckkraft können unterschiedliche Umschlingungswinkel der Reckwalzen nötig sein.

Diese Varianz hat zur Folge, dass entweder sehr spezifische Längsreckanlagen bereitgestellt werden, die nur für ein sehr kleines Spektrum an unterschiedlichen Kunststofffolien, beispielsweise dünne PET-Folien (d < 30 µm), geeignet sind.

Um ein größeres Spektrum an Kunststofffolien mit nur einer Längsreckanlage abdecken zu können, sind universelle Längsreckwerke, die unterschiedliche Walzen umfassen, bekannt. Je nach gewünschtem Kunststofffolienprodukt, können unterschiedliche Walzen für die Längsverstreckung genutzt werden. Die übrigen, für die Längsverstreckung nicht benötigten Walzen werden dann als sogenannte Transferwalzen eingesetzt, die die Kunststofffolie führen, aber nicht weiter verstrecken. Diese universellen Längsreckwerke erlauben zwar die Herstellung eines größeren Produktspektrums, allerdings ist die Kunststofffolienqualität im Vergleich zu spezifischen Längsreckanlagen oft herabgesetzt. Dies ist u.a. darauf zurück zu führen, dass die Kunststofffolie über eine unnötig hohe Anzahl an Walzen geführt wird.

Grundsätzlich ist es auch möglich die Reckwalzen einer spezifischen Längsreckanlage zu tauschen, um die Längsreckanlage für einen neuen Kunststofffolientyp umzurüsten. Dies ist jedoch mit langen Rüstzeiten verbunden, sodass dies oftmals unwirtschaftlich ist. Insbesondere ist in diesem Fall kein schneller Kunststofffolienproduktwechsel auf der Anlage möglich.

### Beschreibung der Erfindung

Vor diesem Hintergrund ist es Aufgabe der vorliegenden Erfindung, eine verbesserte Längsreckanlage und eine verbesserte Anlage zur Herstellung einer Kunststofffolie bereitzustellen, die es insbesondre ermöglicht unterschiedliche Kunststofffolien herzustellen bzw. zu verstrecken und zugleich eine hohe Kunststofffolienqualität bietet.

Die Aufgabe wird durch eine Längsreckanlage nach Anspruch 1, sowie durch eine Anlage zur Herstellung einer Kunststofffolie nach Anspruch 14 und durch ein Verfahren nach Anspruch 15 gelöst. Weitere Aspekte der Erfindung sind in den abhängigen Ansprüchen, sowie in der nachfolgenden Beschreibung genannt.

Insbesondere wird die Aufgabe durch eine Längsreckanlage zum Verstrecken einer Kunststofffolie in Längsrichtung gelöst. Die Längsreckanlage umfasst einen Folieneinlauf und einen Folienauslass sowie einen Reckbereich.

Der Folieneinlauf dient der Aufnahme einer Kunststofffolie, beispielsweise von einer Casting-Unit. Der Folienauslass dient dem Ausgeben der Kunststofffolie aus der Längsreckanlage. Nach der Längsreckanlage kann die Kunststofffolie beispielsweise in Querrichtung verstreckt werden und/oder aufgewickelt werden.

Der Reckbereich ist zwischen dem Folieneinlauf und dem Folienauslass angeordnet und umfasst zumindest eine Längsreckmodulaufnahme. Diese ist dazu eingerichtet ein Längsreckmodul aufzunehmen, sodass dieses in einer Betriebsposition ist. Mithin kann ein in der Längsreckmodulaufnahme aufgenommenes Längsreckmodul zum Verstrecken der Kunststofffolie in Längsrichtung genutzt werden.

Die Längsreckanlage umfasst weiterhin zumindest ein erstes Längsreckmodul und ein zweites Längsreckmodul. Weitere Längsreckmodule, wie beispielsweise ein drittes Längsreckmodul, können ebenso vorgesehen sein.

Die Längsreckmodule sind in die Längsreckmodulaufnahme einsetzbar und gegeneinander austauschbar. Mithin können in der Längsreckanlage unterschiedliche Längsreckmodule zum Verstrecken der Kunststofffolie in Längsrichtung genutzt werden, abhängig davon, welches der Längsreckmodule in die Längsreckmodulaufnahme (d.h. in einer Betriebsposition) eingesetzt ist.

Das erste Längsreckmodul umfasst erste Reckwalzen, die zumindest einen Reckspalt definieren. Das zweite Längsreckmodul umfasst zweite Reckwalzen, die zumindest einen Reckspalt definieren. Der Reckspalt des zweiten Längsreckmoduls ist von dem zumindest Reckspalt des ersten Längsreckmoduls verschieden. Die Reckwalzen können beispielsweise in einem Rahmen und/oder Gehäuse des entsprechenden Längsreckmoduls gehalten, insbesondere gelagert sein.

Erfindungsgemäß unterscheidet sich das erste Längsreckmodul von dem zweiten Längsreckmodul in zumindest einem der folgenden Parameter:
- Anzahl der Reckspalte,
- einer Oberfläche zumindest einer Reckwalze, und/oder
- in einer Geometrie zumindest einer Reckwalze.

Weiterhin können sich das erste Längsreckmodul und das zweite Längsreckmodul in der Anzahl und Anordnung von Heizelementen (bspw. IR-Strahler) unterscheiden.

Da die Längsreckanlage unterschiedliche Längsreckmodule umfasst, die in die Längsreckmodulaufnahme eingesetzt werden können, können unterschiedliche Kunststofffolien auf der Längsreckanlage mit hoher Qualität hergestellt bzw. verstreckt werden. Insbesondere können so auf einfache Weise unterschiedliche Verstreckungsprozesse realisiert werden, da die einzelnen Längsreckmodule spezifisch an einen bestimmten Verstreckungsprozess angepasst sein können.

Das Einsetzen bzw. Tauschen der Längsreckmodule in die Längsreckmodulaufnahme kann zudem deutlich schneller erfolgen, als beispielsweise der Tausch von herkömmlichen Reckwalzen. Dies ist insbesondere möglich, da das gesamte Längsreckmodul aus dem Reckbereich (bzw. der Längsreckmodulaufnahme) entnommen werden kann und ein zweites, anderes Längsreckmodul in die gleiche Aufnahme eingesetzt werden kann.

In einem Aspekt ist die Längsreckanlage so eingerichtet, dass das Verstrecken der Kunststofffolie in Längsrichtung ausschließlich in dem Längsreckmodul erfolgt, welches in der Längsreckmodulaufnahme aufgenommen ist. Gemäß diesem Aspekt sind in der übrigen Längsreckanlage keine weiteren Reckschritte, insbesondere keine weiteren Reckspalte, implementiert. Die Verstreckung in Längsrichtung kann mithin mit hoher Qualität in dem spezifischen Längsreckmodul erfolgen. Ebenso ist es möglich, dass die Längsreckanlage zumindest einen weiteren Reckspalt umfasst, der der Längsreckmodulaufnahme nach oder vorgeschalten ist.

Beispielsweise kann das erste Längsreckmodul mehr Reckspalte umfassen als der zweite Längsreckmodul. Insbesondere kann das erste Längsreckmodul zumindest zwei Reckspalte, oder zumindest drei Reckspalte umfassen. Das zweite Längsreckmodul kann beispielsweise genau einen Reckspalt umfassen.

Somit kann auf der Längsreckanlage einerseits ein Mehr-Schritt Verstreckungsprozess und andererseits ein Ein-Schritt Verstreckungsprozess ausgeführt werden.

Grundsätzlich gibt es verschiedene Verstreckungsprozesse mit den denen eine Kunststofffolie, beispielsweise eine PET Kunststofffolie, in einer Längsreckanlage verstreckt werden kann. Welcher Verstreckungsprozess die beste Kunststofffolienqualität bringt, ist insbesondere vom gewünschten Kunststofffolienprodukt bzw. dem Kunststofffolientyp abhängig.

Für Kunststofffolien, insbesondere PET-Folien, mit einer Kunststofffoliendicke im Bereich von 5 µm bis 40 µm, oder im Bereich von 6 µm bis 35 µm, wird die Kunststofffolie beispielsweise in mehreren Schritten, d.h. in mehreren aufeinanderfolgenden Reckspalten gestreckt.

Ein Mehr-Schritt Verstreckungsprozess kann beispielsweise drei Reckspalte nutzen, wobei das Reckverhältnis in jedem der Reckspalte unterschiedlich sein kann. Ebenso ist es möglich, beispielsweise vier Reckspalte, 5 Reckspalte oder mehr Reckspalte bereit zu stellen.

Beispielsweise kann ein Reckspalt, der zuerst von der Kunststofffolie passiert wird ein erstes Reckverhältnis aufweisen. Nachfolgende Reckspalte, wie ein zweiter oder dritter Reckspalt, können ein zweites, anderes Reckverhältnis aufweisen. Insbesondere kann das Reckverhältnis eines nachfolgenden Reckspalts kleiner, größer oder gleich sein, als das Reckverhältnis eines direkt vorhergehenden Reckspalts.

In einem Drei-Schritt Verstreckungsprozess können die Reckverhältnisse der jeweiligen Reckspalte beispielsweise wie folgt gewählt sein, sodass sich ein Gesamtreckverhältnis von etwa 4:1 ergibt, die Kunststofffolie also etwa um den Faktor 4 gelängt wurde.

| | |
|---|---|
| Reckverhältnis des ersten Reckspalts: | z.B. 1.1 : 1 |
| Reckverhältnis des zweiten Reckspalts: | z.B. 1.5 : 1 oder 2.4:1 |
| Reckverhältnis des dritten Reckspalts: | z.B. 2.5 : 1 oder 1.7:1 |

Es versteht sich, dass die obigen Reckverhältnisse nur exemplarisch sind und nicht beschränkend verstanden werden sollen.

In diesem Beispiel kann die Dicke der Kunststofffolie zu Beginn der Längsverstreckung (= Castfilmdicke) im Bereich von 100 bis 400 µm liegen. Nach dem Durchlaufen des Drei-Schritt Verstreckungsprozesses kann diese mono-axial verstreckte Kunststofffolie dann eine Dicke im Bereich von etwa 25 µm bis 90 µm aufweisen. Durch eine anschließende Verstreckung in Querrichtung kann die Dicke der Kunststofffolie auf beispielsweise 5 µm bis 40 µm reduziert werden.

Für Kunststofffolien, insbesondere PET-Folien, mit einer Kunststofffoliendicke im Bereich von 30 µm bis 330 µm kann die Kunststofffolie beispielsweise auch in einem einzigen Schritt, d.h. in einem Reckspalt gestreckt werden. Das Reckverhältnis kann beispielsweise etwa 3:1 betragen.

In diesem Beispiel kann die Dicke der Kunststofffolie zu Beginn der Längsverstreckung (= Castfilmdicke) im Bereich von 300 µm bis 3200 µm liegen. Nach dem Durchlaufen des Ein-Schritt Verstreckungsprozesses kann diese mono-axial verstreckte Kunststofffolie dann eine Dicke im Bereich von etwa 100 µm bis 1000 µm aufweisen. Durch eine anschließende Verstreckung in Querrichtung kann die Dicke der Kunststofffolie auf beispielsweise 30 µm bis 330 µm reduziert werden.

In einem solchen Ein-Schritt Verstreckungsprozess wird die Kunststofffolie beispielsweise bei Temperaturen verstreckt, die unterhalb der Temperaturen eines Mehr-Schritt Verstreckungsprozesses liegen.

Um die zu verstreckende Kunststofffolie zu temperieren, kann das erste Längsreckmodul und/oder das zweite Längsreckmodul zumindest ein Heizelement umfassen. Das zumindest eine Heizelement kann beispielsweise ein IR-Heizelement, ein Heizlüfter, oder dergleichen sein.

Beispielsweise kann ein Heizelement auf zumindest einer Seite der Kunststofffolie angeordnet sein, oder es können Heizelemente auf beiden Seiten der Kunststofffolie, insbesondere sich gegenüberliegend angeordnet sein.

Zudem kann das zumindest eine Heizelement einem Reckspalt zugeordnet sein. Sind mehrere Reckspalte vorgesehen, kann jedem Reckspalt zumindest ein Heizelement zugeordnet sein.

In einem weiteren Aspekt kann zumindest eine Reckwalze, ein Teil der Reckwalzen, oder alle Reckwalzen eine beheizbare Reckwalze sein. Somit kann die Kunststofffolie zum Verstrecken temperiert werden. Typischerweise wird die Folie beim Längsverstrecken auf eine gewünschte Folientemperatur vorgewärmt bzw. temperiert. Neben beheizbaren Reckwalzen kann die Temperierung auch über Heizelemente, wie IR-Strahler, oder Heizlüfter erfolgen.

Bei einem Mehr-Schritt Verstreckungsprozess kann die zumindest eine Reckwalze bzw. die Reckwalzen beispielsweise auf eine Temperatur temperiert werden, die im Bereich von 100°C bis 130°C liegt. Die ideale Temperatur ist u.a. materialabhängig. Für die Herstellung einer dünnen PET-Folie kann die Temperatur beispielsweise im Bereich von 110°C bis 120°C liegen.

Für einen Ein-Schritt Verstreckungsprozess kann die zumindest eine Reckwalze bzw. die Reckwalzen beispielsweise auf eine Temperatur temperiert werden, die im Bereich von 70°C bis 100°C liegt. Für die Herstellung einer dicken PET-Folie kann die Temperatur beispielsweise im Bereich von 80°C bis 90°C liegen.

Um eine hohe Kunststofffolienqualität und ein gleichmäßiges Verstrecken in Längsrichtung zu erreichen, kann die Reckwalze/die Reckwalzen eine Oberfläche aufweisen, die eines der folgenden umfasst:
- eine galvanische Beschichtung (beispielsweise Chrom),
- Polytetrafluorethylen,
- eine Fluor-Polymer Beschichtung,
- Carbide (beispielsweise Wolframcabid), und/oder
- Keramik.

Es zeigt sich, dass mit Fluor-Polymer beschichtete Walzen für Verstreckprozessen mit einer Temperatur > 100°C geeignet sind. Insbesondere modifizierte Fluor-Polymer Beschichtung, wie Tfe-Lok^{®} Beschichtungen haben sich als vorteilhaft erwiesen.

Carbid oder keramikbeschichte Walzen eignen sich hingegen für Ein-Schritt Verstreckungsprozesse, die bei geringeren Temperaturen (< 100°C) ausgeführt werden.

Es versteht sich, dass mit den hier beschriebenen Längsreckanlagen beliebige ein- oder mehrlagige Kunststofffolien verstreckt werden können. Diese können beispielsweise eines der folgenden Materialien umfassen, sind jedoch nicht auf diese beschränkt: Polyethylen (PE), wie LDPE (Low-Density Polyethylen) oder HDPE (High-Density Polyethylen), Polypropylen (PP), Polyester (PET), Polyvinylchlorid (PVC), Polystyrol (PS), und/oder Polyamid (PA).

Weiterhin kann zumindest eine Reckwalze des ersten und/oder zweiten Längsreckmoduls translatorisch verschiebbar eingerichtet sein. Die translatorische Verschiebung kann insbesondere in einer Richtung quer zu Axialrichtung der Reckwalze möglich sein, sodass eine freie Folienlänge im Reckspalt eingestellt werden kann.

Weiterhin kann das erste und/oder zweite Längsreckmodul dazu eingerichtet sein, die Kunststofffolie auf zumindest zwei unterschiedlichen Pfaden durch das Längsreckmodul zu führen. Somit können beispielsweise unterschiedliche Umschlingungswinkel in nur einem Längsreckmodul realisiert werden.

Zudem kann das erste und/oder zweite Längsreckmodul zumindest eine Transferwalze umfassen, welche zum Umlenken der Kunststofffolie eingerichtet ist. Die zumindest einer Transferwalze kann einer Reckwalze vor- oder nachfolgen. Weithin kann die zumindest eine Transferwalze des ersten und/oder zweiten Längsreckmoduls translatorisch verschiebbar eingerichtet sein. Die translatorische Verschiebung kann insbesondere in einer Richtung quer zu Axialrichtung der Transferwalze möglich sein, sodass eine freie Folienlänge im Reckspalt eingestellt werden kann.

Zudem kann das erste und/oder zweite Längsreckmodul zumindest eine Nipwalze umfassen. Die Nipwalze kann einer Reckwalze oder einer Transferwalze zugeordnet sein und so angeordnet sein, dass die Nipwalze die Kunststofffolie auf die Reckwalze bzw. die Transferwalze drückt.

In einem Aspekt ist die Reckwalze bzw. sind die Reckwalzen angetriebene Walzen. Der Antrieb kann direkt oder indirekt erfolgen. Ebenso kann die zumindest eine Nipwalze (direkt oder indirekt) angetrieben werden. Der Antrieb kann Teil des entsprechenden Längsreckmoduls sein. Alternativ kann der Antrieb auch Teil der Längsreckanlage sein. Die Reckwalze(n) kann in diesem Fall über eine entsprechende Kupplung und/oder eine Welle (insbesondere eine Gelenkwelle) mit dem Antrieb verbunden werden.

Zudem kann das erste und/oder zweite Längsreckmodul zumindest einen Versorgungsanschluss umfassen. Die Längsreckmodulaufnahme kann einen komplementären Versorgungsanschluss umfassen, welcher mit dem Versorgungsanschluss koppelbar ist, wenn das Längsreckmodul in der Längsreckmodulaufnahme aufgenommen ist. Dieser Versorgungsanschluss kann dazu eingerichtet sein, das Längsreckmodul mit Luft (insbesondere Druckluft), Wasser (insbesondere temperierten Wasser), Öl (insbesondere temperiertes Öl und/oder Hydrauliköl), elektrischer Energie und/oder mechanischer Energie zu versorgen. Der Versorgungsanschluss bzw. die Versorgungsanschlüsse können Schnellkupplungssysteme umfassen, die einen werkzeuglosen Anschluss ermöglichen. Ebenso können unterschiedliche Anschlüsse in einem Anschluss kombiniert sein. Beispielsweise kann ein kombiniertes Steckverbindungselement bereitgestellt werden, welches zugleich elektrische Energie sowie Luft und/oder Öl leiten kann.

Der zumindest eine Versorgungsanschluss erlaubt es, die Rüstzeiten beim Wechsel eines Längsreckmoduls zu reduzieren. Weiterhin kann das Längsreckmodul auch dann z.B. mit elektrischer Energie und/oder einem temperierten Fluid (z.B. Wasser, oder Öl) versorgt werden, wenn es nicht in Benutzung ist, sondern in einer Längsreckmodullageraufnahme zwischengelagert ist. Dies erlaubt es das Längsreckmodul bereits vor dem Einsetzen in die Längsreckmodulaufnahme zu temperieren. Somit können die Rüstzeiten weiter reduziert werden.

Weiterhin kann das erste und/oder zweite Längsreckmodul zumindest ein Zentrierungselement umfassen. Die Längsreckmodulaufnahme kann zumindest ein komplementäres Zentrierungselement umfassen. Das Zentrierungselement und das komplementäre Zentrierungselement können so zusammengreifen, wenn das Längsreckmodul in der Längsreckmodulaufnahme aufgenommen ist, um eine Position und/oder Orientierung des Längsreckmoduls festzulegen. Insbesondere können das Zentrierungselement und das komplementäre Zentrierungselement formschlüssig zusammengreifen. Insbesondere kann das Zentrierungselement eine axiale und/oder radiale Zentrierung bereitstellen. Sind mehrere Zentrierungselemente vorgesehen, kann ein erstes Zentrierungselement eine axiale Zentrierung bereitstellen und ein zweites Zentrierungselement eine radiale Zentrierung.

In einem Aspekt umfasst die Längsreckanlage einen Vorheizbereich, der dem Reckbereich vorgelagert ist. Mithin kann die Kunststofffolie vor dem Verstrecken in Längsrichtung auf eine vordefinierte, gewünschte Temperatur temperiert werden. Zudem kann die Längsreckanlage einen Kühlbereich umfassen, der dem Reckbereich nachgelagert ist. In dem Kühlbereich kann die längsverstreckte Kunststofffolie abgekühlt werden, bevor diese weiterbearbeitet, beispielsweise querverstreckt, wird.

Zudem kann die Längsreckanlage eine Einzugskette, welche zum Einziehen der Kunststofffolie in die Längsreckanlage eingerichtet ist umfassen. Dies vereinfacht das Einziehen der Kunststofffolie beim in Betrieb nehmen der Längsreckanlage bzw. das erneute Einziehen der Kunststofffolie nach einer Störung, wie einem Folienabriss.

Die Längsreckanlage kann optional zumindest einen Kettengreifer umfassen. Ein solcher Kettengreifer kann dem Folieneinlauf vorgelagert und/oder dem Folienauslass nachgelagert sein. Der Kettengreifer ermöglicht es die Einzugskette zu halten, während das Längsreckmodul gewechselt wird. Hierzu ist typischerweise das Öffnen der Einzugskette im Bereich der Längsreckmodulaufnahme nötig. Um zu verhindern, dass die Einzugskette aus dem Reckbereich gleitet, wenn diese geöffnet ist, können die Kettengreifer die Kette halten.

Insbesondere kann der zumindest eine Kettengreifer dazu eingerichtet sein, die Einzugskette derart zu greifen, dass eine Bewegung der Einzugskette in einer Richtung, die von dem Reckbereich weg weist blockiert ist. Damit kann das Gleiten der Einzugskette aus dem Reckbereich verhindert werden. Ein Einziehen der Einzugskette in den Reckbereich kann hingegen weiterhin möglich sein, auch wenn der Kettengreifer die Einzugskette gegriffen hat. Hierzu kann der Kettengreifer beispielsweise eine Greifbacke mit einer Verzahnung (z.B. Sägezahngeometrie) aufweisen, die die Kette in einer Richtung blockiert und in der anderen Richtung freigibt.

Weiterhin kann das erste und/oder zweite Längsreckmodul eine austauschbare Verschleißbaugruppe umfassen, wobei die Verschleißbaugruppe zumindest zwei Walzen, insbesondere Reckwalzen, umfasst. Somit können die dem Verschleiß unterliegenden Reckwalzen schnell ausgetauscht werden.

In einem Aspekt umfasst die Längsreckanlage weiterhin zumindest eine Längsreckmodullageraufnahme und/oder zumindest eine Verschleißbaugruppenlageraufnahme. Die zumindest eine Längsreckmodullageraufnahme kann dazu eingerichtet sein, ein nicht in die Längsreckmodulaufnahme aufgenommenes Längsreckmodul zwischenzulagern und optional zu temperieren. Die zumindest eine Verschleißbaugruppenlageraufnahme kann entsprechend dazu eingerichtet sein, eine Verschleißbaugruppe vorzuhalten und optional zu temperieren.

Das Temperieren kann aktiv oder passiv erfolgen. Ein aktives Temperieren umfasst beispielsweise die Zufuhr von elektrischer Energie und/oder thermischer Energie (beispielsweise in Form eines temperierten Fluids), um ein in der Längsreckmodullageraufnahme aufgenommenes Längsreckmodul und/oder eine in der Verschleißbaugruppenlageraufnahme aufgenommene Verschleißbaugruppe gezielt zu temperieren. Hierdurch kann das Längsreckmodul/die Verschleißbaugruppe auf eine gewünschte Temperatur temperiert werden. Diese kann der Betriebstemperatur des Verstreckprozesses entsprechen. Ein Aufheizen des Längsreckmodul/der Verschleißbaugruppe in der Betriebsposition kann dadurch verkürzt werden oder sogar entfallen. Hierdurch verringert sich die Zeit, die nötig ist um das Längsreckmodul bzw. die Verschleißbaugruppe zu wechseln.

Ein passives Temperieren kann erreicht werden, indem die Längsreckmodullageraufnahme bzw. die Verschleißbaugruppenlageraufnahme so bezüglich der Längsreckanlage angeordnet ist, dass die Abwärme der Längsreckanlage ein in der Längsreckmodullageraufnahme aufgenommenes Längsreckmodul und/oder eine in der Verschleißbaugruppenlageraufnahme aufgenommene Verschleißbaugruppe zumindest vorwärmt. Die Längsreckmodullageraufnahme bzw. die Verschleißbaugruppenlageraufnahme kann beispielsweise unmittelbar über einem Vorheizbereich angeordnet sein.

Die Aufgabe wird zudem durch eine Anlage zur Herstellung einer Kunststofffolie gelöst, wobei die Anlage eine Längsreckanlage der zuvor beschriebenen Art umfasst. Hierdurch können die oben genannten Vorteile erreicht werden. Zudem kann die Anlage zur Herstellung einer Kunststofffolie eine Extrusionsanlage, eine Casting-Unit und/oder eine Querreckanlage umfassen.

Auch ein Verfahren zum Verstrecken einer Kunststofffolie in Längsrichtung löst die Aufgabe. Das Verfahren umfasst zumindest die folgenden Schritte
- Einsetzen eines Längsreckmoduls in eine Längsreckmodulaufnahme einer Längsreckanlage;
- Einführen einer extrudierten Kunststofffolie in die Längsreckanlage, und
- Verstrecken der Kunststofffolie in Längsrichtung mittels des eingesetzten Längsreckmoduls.

Durch einen Wechsel des Längsreckmoduls können unterschiedliche Kunststofffolien mit hoher Qualität produziert werden.

### Kurze Beschreibung der Figuren

Die Erfindung wird nachfolgend anhand der beigefügten Figuren beispielhaft näher erläutert. Dabei zeigt
- Figur 1: eine schematische Darstellung einer Anlage zur Herstellung einer Kunststofffolie;
- Figur 2: ein universelles Längsreckwerk des Stands der Technik;
- Figur 3: eine schematische Darstellung einer erfindungsgemäßen Längsreckanlage;
- Figur 4A: eine schematische Darstellung eines ersten Längsreckmoduls;
- Figur 4B: eine weitere schematische Darstellung des ersten Längsreckmoduls;
- Figur 5: eine schematische Darstellung eines zweiten Längsreckmoduls;
- Figur 6: eine schematische Darstellung eines Längsreckmoduls mit Einzugskette;
- Figur 7: ein schematisches Ablaufdiagramm eines erfindungsgemäßen Verfahrens.

### Beschreibung der Figuren

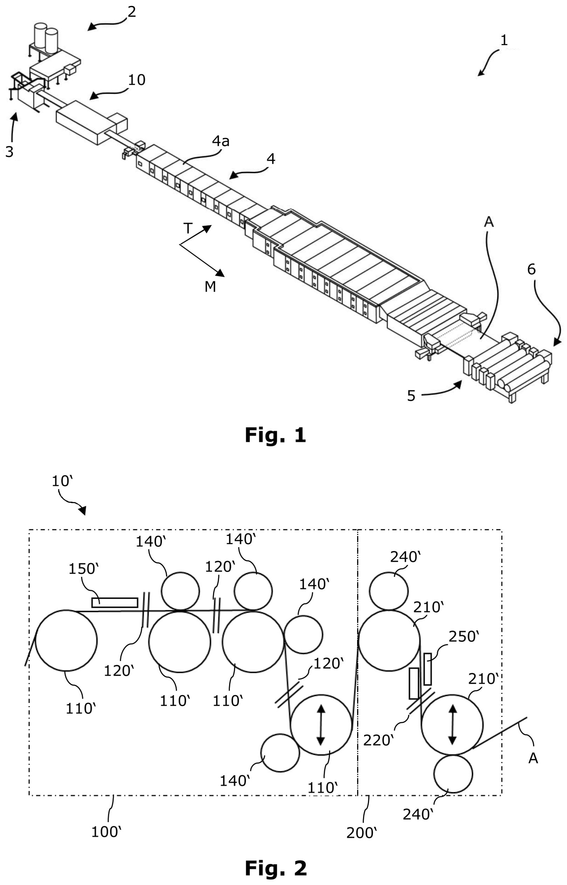

In Figur 1 ist äußerst schematisch eine Anlage 1 zur Herstellung einer Kunststofffolie A dargestellt, die mehrere verschiedene Anlagen und Vorrichtungen umfasst.

Die Anlage 1 ist beispielsweise eine Kunststofffolienherstellungsanlage zur Herstellung einer Kunststofffolie, beispielsweise einer Verpackungsfolie, anhand der - ohne Beschränkung des Schutzbereichs - die Erfindung beispielhaft erläutert wird.

Im gezeigten Beispiel weist die Anlage 1 eine Extrusionsanlage 2, eine Casting-Unit 3, zumindest eine Längsreckanlage 10 (MDO, "Machine Direction Orienter"), eine Querreckanlage 4 (TDO, "Transverse Direction Orienter"), eine Behandlungseinrichtung 5 sowie eine Wickelvorrichtung 6 auf.

Die Extrusionsanlage 2 weist einen Extruder auf und ist dazu eingerichtet, aus wenigstens einem Ausgangsprodukt (z.B. Kunststoffgranulat und/oder -recyclat) eine Schmelze zu erzeugen, die auf eine Kühlwalze der Casting-Unit 3 aufgetragen wird, wodurch eine Kunststofffolie A erzeugt wird. Diese extrudierte, noch nicht verstreckte Kunststofffolie wird auch als Castfilm bezeichnet und kann eine Dicke im Bereich von 50 µm bis 3200 µm, insbesondere im Bereich von 100 µm bis 500 µm aufweisen.

Die erzeugte Kunststofffolie A kann eine oder mehrere Lagen aufweisen. Denkbar ist bei einer mehrlagigen Kunststofffolie, dass ein Extruder mehrere oder alle Lagen erzeugt, oder dass für jede Lage ein Extruder vorgesehen ist.

Beispielsweise ist der Extruder oder sind die Extruder ein Einschneckenextruder, Kaskadenextruder und/oder Doppelschneckenextruder.

Denkbar ist auch, dass andere Misch- und Aufbereitungsaggregate, wie ein Buskneter oder ein Planetwalzenextruder verwendet werden.

Die in der Casting-Unit 3 enthaltene Kühlwalze ist temperiert.

Die Querreckanlage 4, wie sie beispielsweise in der DE 10 2021 128 332 A1 beschrieben ist, hat entlang der üblichen Bewegungs- bzw. Abzugsrichtung der Anlage 1 einen Ofen 4a mit verschiedenen Zonen zur Temperierung der Kunststofffolie.

Die Querreckanlage 4 hat ein Antriebssystem für die Kunststofffolie A mit zwei Transportschienen, um die Kunststofffolie durch die verschiedenen Zonen zu fördern. An jeder der Transportschienen sind in an sich bekannter Weise eine Vielzahl von Kluppeneinheiten geführt.

Die Kluppeneinheiten können die Kunststofffolie A greifen und durch einen geeigneten Antrieb entlang der Transportschiene bewegt werden, sodass die Kunststofffolie A durch die Querreckanlage 4 gefördert wird.

In der ersten Zone, auch Vorheizzone genannt, wird die Kunststofffolie erwärmt. In der anschließenden zweiten Zone ("Reckzone") wird die Kunststofffolie in Querrichtung verstreckt, sodass sie zum Ende der zweiten Zone eine größere Breite und geringere Dicke aufweist als zu Beginn. Die Verstreckung erfolgt dadurch, dass der Abstand der Schienen des Antriebssystems in der Reckzone vergrößert wird.

In der dritten und weiteren Zonen ("Wärmebehandlungszone", "Weiterheizzone" und/oder "Annealingzone" genannt) kann beispielsweise eine Relaxierung der Kunststofffolie bei hohen Temperaturen erfolgen.

In der letzten Zone ("Kühlzone") wird die Kunststofffolie abgekühlt.

Eine weitere Zone wird Neutralzone genannt und dient zur Trennung von Zonen. Die Neutralzone ist beispielsweise ein leerer Raum ohne Belüftung. Die Neutralzone kann sich zwischen den jeweiligen vorher beschriebenen Zonen befinden, zum Bespiele zwischen der Annealingzone und der Kühlzone.

Eine solche Querreckanlage 4 ist beispielsweise aus der WO 2014/094803 A1 bekannt.

Die Zonen der Querreckanlagen 4 können auch anders aufgeteilt sein und/oder in ihrer Länge anders ausgeführt sein. Zum Beispiel können weniger oder kürzere Neutralzonen vorgesehen sein oder die Neutralzonen können an anderen Stellen, auch zusätzlich, angeordnet sein. Auch Änderungen an den übrigen Zonen sind denkbar.

Die Behandlungsvorrichtung 5 ist beispielsweise eine Vorrichtung zur Aktivierung der Oberfläche der Kunststofffolie A durch eine Coronabehandlung, beispielsweise um eine bessere Bedruckbarkeit oder Metallanhaftung zu realisieren. Die Coronabehandlung kann einseitig oder beidseitig erfolgen.

Die Wickelvorrichtung 6 dient zum Aufwickeln der erzeugten Kunststofffolie A und ist die in Abzugsrichtung letzte Vorrichtung. Sie weist eine Wickelhülse auf, auf der die Kunststofffolie A aufgewickelt wird.

Figur 2 zeigt ein universelles Längsreckwerk 10' des Stands der Technik. Dieses Längsreckwerk 10' ist grundsätzlich dazu geeignet, Kunststofffolien unterschiedlicher Dicke mit nur einer Längsreckanlage herstellen zu können. Hierzu umfasst das Längsreckwerk 10' unterschiedliche Walzen.

Die Reckwalzen 110' sind einem ersten Abschnitt 100' zugeordnet und bilden zwischen sich drei Reckspalte 120' aus. Optional können auch Nipwalzen 140' vorgesehen sein, die die Kunststofffolie A auf die Reckwalzen 110' drückt.

Weitere Reckwalzen 210' sind einem zweiten Abschnitt 200' zugeordnet. Die beiden Reckwalzen 210' bilden zwischen sich den Reckspalt 220'. Über Nipwalzen 240' kann die Kunststofffolie A an die Reckwalzen 210' angedrückt werden. Weiterhin können Heizelemente 150', 250' vorgesehen sein, die die Kunststofffolie A temperieren.

Mit dem gezeigten universellen Längsreckwerk 10' können Kunststofffolien in einem Mehr-Schritt Verstreckungsprozess oder einem Ein-Schritt Verstreckungsprozess in Längsrichtung verstreckt werden. Für einen Mehr-Schritt Verstreckungsprozess ist der erste Bereich 100' aktiv. Dies bedeutet, dass die Reckwalzen 110' mit unterschiedlicher Rotationsgeschwindigkeit rotiert werden, um die Verstreckung in den drei gezeigten Reckspalten zu erreichen. Die Reckwalzen 210' sind in diesem Fall als Transferwalzen eingesetzt, d.h. sie rotieren mit der gleichen Geschwindigkeit. Im zweiten Abschnitt 200' kommt es mithin zu keiner weiteren Verstreckung.

Für einen Ein-Schritt Verstreckungsprozess ist der zweite Bereich 200' aktiv. Dies bedeutet, dass die Reckwalzen 210' mit unterschiedlicher Rotationsgeschwindigkeit rotiert werden, um die Verstreckung in dem Reckspalt 220' zu erreichen. Die Reckwalzen 110' sind in diesem Fall als Transferwalzen eingesetzt, d.h. sie rotieren mit der gleichen Geschwindigkeit. Im ersten Abschnitt 100' kommt es mithin zu keiner Verstreckung.

Dieses universelle Längsreckwerke erlauben zwar die Herstellung von Folien unterschiedlichster Dicke, allerdings ist die Kunststofffolienqualität oft herabgesetzt, da die Kunststofffolie über eine unnötig hohe Anzahl an Walzen geführt werden muss und somit leicht Kratzer oder ähnliches auf der Kunststofffolie entstehen können.

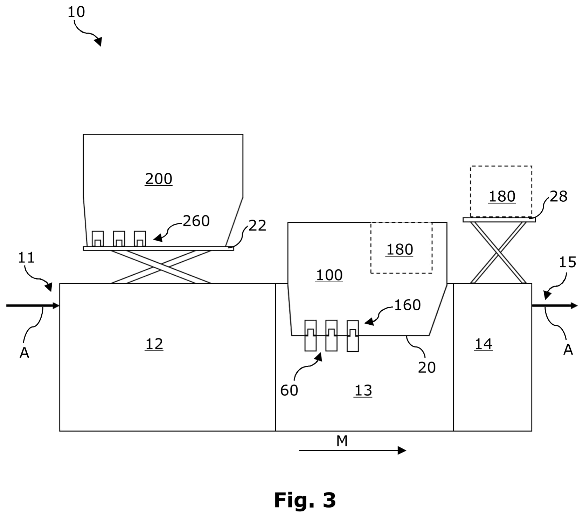

Figur 3 zeigt eine schematische Darstellung einer erfindungsgemäßen Längsreckanlage 10. Die Längsreckanlage 10, die typischerweise einer Casting-Unit 4 nachgeschaltet ist, umfasst einen Folieneinlauf 11 zur Aufnahme der Kunststofffolie A und einen Folienauslass 15 zur Ausgabe der längsverstreckten Kunststofffolie. Zwischen dem Folieneinlauf 11 und dem Folienauslass 15 ist eine optionaler Vorheizbereich 12, ein Reckbereich 13 sowie eine optionaler Kühlbereich angeordnet.

Die Temperatur im Vorheizbereich kann beispielsweise gleich oder größer als 110°C, insbesondere gleich oder größer als 120°C sein, und/oder gleich oder kleiner als 155°C, insbesondere gleich oder kleiner als 145°C sein. Die Temperatur im Reckbereich kann beispielsweise gleich oder größer als 140°C, insbesondere gleich oder größer als 150°C sein, und/oder gleich oder kleiner als 165°C, insbesondere gleich oder kleiner als 155°C sein. Als Temperatur der entsprechenden Bereiche wird beispielsweise die Temperatur der Walzen in den entsprechenden Bereichen verstanden, oder aber auch die Temperatur der Folie im jeweiligen Bereich.

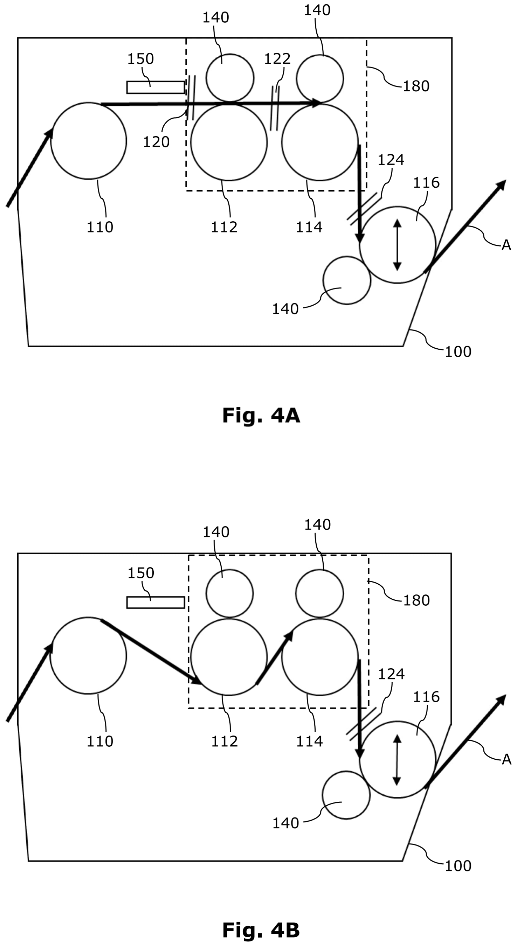

Der Reckbereich umfasst zumindest eine Längsreckmodulaufnahme 20. In dieser Längsreckmodulaufnahme 20 kann, wie gezeigt, ein Längsreckmodul 100 in einer Betriebsposition aufgenommen werden. Dieses Längsreckmodul 100 kann, wie exemplarisch mit Bezug auf die Figuren 4A und 4B erläutert werden wird, dazu eingerichtet sein einen Mehr-Schritt Verstreckungsprozess auszuführen. Mithin können mit dem Längsreckmodul 100 beispielsweise sehr dünne Folien hergestellt werden (endgültige Foliendicke beispielsweise im Bereich 5 µm - 40 µm).

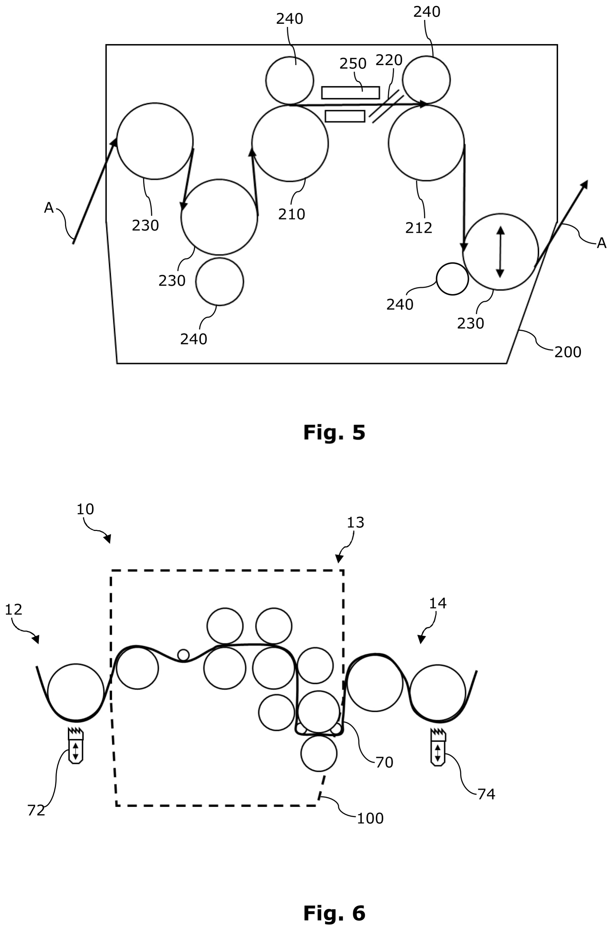

Sollen dickere Folien hergestellt werden, kann das Längsreckmodul 100 durch das Längsreckmodul 200 ausgetauscht. Dieses Längsreckmodul 200 kann, wie exemplarisch mit Bezug auf die Figur 5 erläutert werden wird, dazu eingerichtet sein einen Ein-Schritt Verstreckungsprozess auszuführen.

Hierzu unterscheidet sich das erste Längsreckmodul 100 von dem zweiten Längsreckmodul 200 beispielsweise in der Anzahl der Reckspalte, in einer Oberfläche zumindest einer Reckwalze und/oder in einer Geometrie zumindest einer Reckwalze.

Um das im Moment nicht benötigte Längsreckmodul 200 zwischenzulagern, kann eine Längsreckmodullageraufnahme 22 vorgesehen sein. Diese dient im gezeigten Beispiel nicht nur der Zwischenlagerung, sondern auch dem Temperieren des Längsreckmoduls 200. Das Temperieren kann einerseits passiv erfolgen, da die Längsreckmodullageraufnahme 22 in unmittelbarer Nähe (hier über) dem Kühlbereich 12 angeordnet ist. Zusätzlich kann auch eine aktive Temperierung erfolgen. Hierzu kann das Längsreckmodul 200 beispielsweise über den Versorgungsanschluss 260 mit elektrischer Energie und/oder einem temperierten Fluid (Luft, Wasser, Öl, ...) versorgt werden.

Um das in Betrieb befindliche und in die Längsreckmodulaufnahme 20 eingesetzte Längsreckmodul 100 beispielsweise mit Energie versorgen zu können, kann das Längsreckmodul 100 einen Versorgungsanschluss 160 umfassen. Die Längsreckmodulaufnahme 20 kann zumindest einen komplementären Versorgungsanschluss 60 umfassen, der mit dem Versorgungsanschluss 160 des Längsreckmoduls 100 als auch mit dem Versorgungsanschluss 260 des Längsreckmoduls 200 koppelbar ist, wenn das entsprechende Längsreckmodul 100, 200 in der Längsreckmodulaufnahme 20 aufgenommen ist. Über den Versorgungsanschluss kann das Längsreckmodul 100 neben Energie (elektrischer, mechanischer Energie) auch mit zumindest einem Fluid, wie Luft, Wasser und/oder, Öl, elektrischer Energie und/oder mechanischer Energie zu versorgen. Zudem können Daten von und/oder zu dem Längsreckmodul übertragen werden. Beispielsweise kann das Längsreckmodul eine Kennung umfassen, die in der Längsreckmodulaufnahme ausgelesen wird, um den Verstreckprozess, insbesondere Parameter, wie Folientemperatur, Walzentemperatur, Walzengeschwindigkeit, ..., entsprechend an das eingesetzte Längsreckmodul anzupassen.

Die Figuren 4A und 4B zeigen ein Längsreckmodul 100, welches für einen Mehr-Schritt Verstreckprozess eingerichtet ist. Die Darstellung in den Figuren 4A und 4B unterscheidet sich in der Art der Folienführung. In Figur 4A wird die Kunststofffolie A im Wesentlichen geradlinig über die Reckwalze 112 geführt (Umschlingungswinkel etwa 0°). In Figur 4B wird die Kunststofffolie um die Reckwalze 112 geführt (Umschlingungswinkel etwa 90°).

Das Längsreckmodul 100 umfasst vier Reckwalzen 110, 112, 114, 116. Diese definieren drei Reckspalte 120, 122, 124. Die Walzengeschwindigkeit der Reckwalzen 110, 112, 114, 116 kann dabei so gewählt sein, dass das Reckverhältnis in jedem der Reckspalte 120, 122, 124 unterschiedlich ist. Um sicherzustellen, dass die Kunststofffolie gut an den Reckwalzen 110, 112, 114, 116 anliegt, können eine oder mehrere Nipwalzen 140 vorgesehen sein. Zudem kann die Kunststofffolie beispielsweise über ein Heizelement 150 temperiert werden.

Das in den Figuren 4A und 4B gezeigte Längsreckmodul umfasst weiterhin eine austauschbare Verschleißbaugruppe 180 (s. gestrichelte Linie). Diese kann beispielsweise die Reckwalzen 112, 114 umfassen, die einem hohen Verschleiß ausgesetzt sind. Die austauschbare Verschleißbaugruppe 180 ermöglicht es so die Verschleißbauteile, insbesondere die Reckwalzen 112, 114 gemeinsam und somit schnell zu tauschen. Zudem kann, wie Figur 3 zeigt, eine Verschleißbaugruppenlageraufnahme 28 vorgesehen sein, die dazu eingerichtet ist, eine weitere Verschleißbaugruppe 180 vorzuhalten und optional zu temperieren.

Figur 5 zeigt ein Längsreckmodul 200, welches für einen Ein-Schritt Verstreckprozess eingerichtet ist. Das Längsreckmodul 200 umfasst zwei Reckwalzen 210, 212. Diese definieren einen Reckspalt 220. Die Walzengeschwindigkeit der Reckwalzen 210, 212 kann dabei so gewählt sein, dass sich ein gewünschtes Reckverhältnis in dem Reckspalt 220 einstellt. Um sicherzustellen, dass die Kunststofffolie gut an den Reckwalzen 210, 212, anliegt, können eine oder mehrere Nipwalzen 240 vorgesehen sein. Zudem kann die Kunststofffolie beispielsweise über ein Heizelement 250 temperiert werden. Die hier gezeigte Ausführungsform umfasst zudem optionale Transferwalzen 230.

Wie Figur 6 zeigt, kann die Längsreckanlage 10 eine Einzugskette 70 umfassen. Weiterhin können Kettengreifer 72. 74 vorgesehen sein. Der Kettengreifer 72 ist dem Reckbereich 13 vorgelagert. Der Kettengreifer 74 ist dem Reckbereich 13 nachgelagert. Die Kettengreifer 72, 74 ermöglichen es, die Einzugskette 70 zu halten, während das Längsreckmodul 100, 200 gewechselt wird. Um zu verhindern, dass die beim Wechsel des Längsreckmoduls geöffnete Einzugskette 70 aus dem Reckbereich 13 gleitet, greifen die Kettengreifer 72, 74 die Kette.

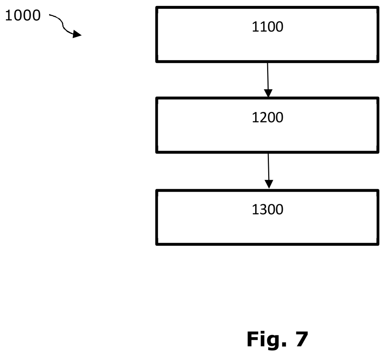

Figur 7 zeigt ein schematisches Ablaufdiagramm eines erfindungsgemäßen Verfahrens 1000 zum Verstrecken einer Kunststofffolie A in Längsrichtung M. Das Verfahren 1000 umfasst zumindest die folgenden Schritte
- Einsetzen 1100 eines Längsreckmoduls 100, 200 in eine Längsreckmodulaufnahme 22 einer Längsreckanlage 10;
- Einführen 1200 einer extrudierten Kunststofffolie (z.B. ein Castfilm) in die Längsreckanlage 10, und
- Verstrecken 1300 der Kunststofffolie in Längsrichtung M mittels des eingesetzten Längsreckmoduls 100; 200.

Durch einen Wechsel des Längsreckmoduls können unterschiedliche Kunststofffolien mit hoher Qualität produziert werden.

### Bezugszeichenliste

- 1: Anlage zur Herstellung einer Kunststofffolie
- 2: Extrusionsanlage
- 3: Casting-Unit
- 4: Querreckanlage
- 4a: Ofen
- 5: Behandlungseinrichtung
- 6: Wickelvorrichtung
- 10: Längsreckanlage
- 10': Längsreckwerk
- 11: Folieneinlauf
- 12: Vorheizbereich
- 13: Reckbereich
- 14: Kühlbereich
- 15: Folienauslass
- 20: Längsreckmodulaufnahme (Betriebsposition)
- 22: Längsreckmodullageraufnahme
- 28: Verschleißbaugruppenlageraufnahme
- 60: komplementärer Versorgungsanschluss
- 70: Einzugskette
- 72: Kettengreifer
- 74: Kettengreifer
- 100: erstes Längsreckmodul
- 100': erster Abschnitt
- 110: Reckwalze
- 110': Reckwalze
- 112: Reckwalze
- 114: Reckwalze
- 116: Reckwalze
- 120: Reckspalt
- 120': Reckspalt
- 122: Reckspalt
- 124: Reckspalt
- 140: Nipwalze
- 140': Nipwalze
- 150: Heizelement (z.B. IR)
- 150': Heizelement
- 160: Versorgungsanschluss
- 180: Verschleißbaugruppe
- 200: zweites Längsreckmodul
- 200': zweiter Abschnitt
- 210: Reckwalze
- 210': Reckwalze
- 212: Reckwalze
- 220: Reckspalt
- 220': Reckspalt
- 230: Transferwalze
- 240: Nipwalze
- 240': Nipwalze
- 250: Heizelement (z.B. IR)
- 250': Heizelement
- 260: Versorgungsanschluss
- 1000: Verfahren
- 1100: Einsetzen
- 1200: Einführen
- 1300: Verstrecken
- A: Kunststofffolie (z.B. PET-Folie)
- M: Längsrichtung

## Patentansprüche

1. Längsreckanlage (10) zum Verstrecken einer Kunststofffolie (A) in Längsrichtung (M), wobei
die Längsreckanlage (10) einen Folieneinlauf (11) und einen Folienauslass (15) sowie einen Reckbereich (13) umfasst, wobei
der Reckbereich (13) zwischen dem Folieneinlauf (11) und dem Folienauslass (15) angeordnet ist und zumindest eine Längsreckmodulaufnahme (20) umfasst, welche zur Aufnahme eines Längsreckmoduls (100, 200) in einer Betriebsposition eingerichtet ist; wobei
die Längsreckanlage (10) weiterhin zumindest ein erstes Längsreckmodul (100) und ein zweites Längsreckmodul (200) umfasst, wobei die Längsreckmodule (100, 200) in die Längsreckmodulaufnahme (20) einsetzbar und gegeneinander austauschbar sind, wobei
das erste Längsreckmodul erste Reckwalzen (110, 112, 114, 116) umfasst, die zumindest einen Reckspalt (120, 122, 124) definieren, und wobei
das zweite Längsreckmodul (200) zweite Reckwalzen (210, 212) umfasst, die zumindest einen Reckspalt (220) definieren, wobei
sich das erste Längsreckmodul (100) von dem zweiten Längsreckmodul (200) in der Anzahl der Reckspalte (120, 122, 124; 220), in einer Oberfläche zumindest einer Reckwalze (110, 112, 114, 116; 210, 212) und/oder in einer Geometrie zumindest einer Reckwalze (110, 112, 114, 116; 210, 212) unterscheidet.

2. Längsreckanlage (10) nach Anspruch 1, wobei die Längsreckanlage (10) so eingerichtet ist, dass das Verstrecken der Kunststofffolie in Längsrichtung (M) ausschließlich in dem Längsreckmodul (100; 200) erfolgt, welches in der Längsreckmodulaufnahme (20) aufgenommen ist.

3. Längsreckanlage (10) nach Anspruch 1 oder 2, wobei
das erste Längsreckmodul (100) zumindest zwei Reckspalte (120, 122, 124), oder zumindest drei Reckspalte (120, 122, 124) umfasst, und/oder wobei
das zweite Längsreckmodul (200) genau einen Reckspalt (220) umfasst.

4. Längsreckanlage (10) nach einem der Ansprüche 1 bis 3, wobei
das erste Längsreckmodul (100) und/oder das zweite Längsreckmodul (200) zumindest ein Heizelement (150; 250) umfasst, welches dazu eingerichtet ist, die Kunststofffolie zu temperieren, und/oder wobei
zumindest eine Reckwalze (110, 112, 114, 116; 210, 212) eine beheizbare Reckwalze ist.

5. Längsreckanlage (10) nach einem der Ansprüche 1 bis 4, wobei zumindest eine der Reckwalzen (110, 112, 114, 116; 210, 212) eine Oberfläche aufweist, die eines der folgenden umfasst:
- eine galvanische Beschichtung,
- Polytetrafluorethylen,
- eine Fluor-Polymer Beschichtung,
- Carbide, und/oder
- Keramik.

6. Längsreckanlage (10) nach einem der Ansprüche 1 bis 5, wobei zumindest eine Reckwalze (116; 220) des ersten und/oder zweiten Längsreckmoduls (100; 200) translatorisch verschiebbar eingerichtet ist.

7. Längsreckanlage (10) nach einem der Ansprüche 1 bis 6, wobei das erste und/oder zweite Längsreckmodul (100; 200) dazu eingerichtet ist, die Kunststofffolie (A) auf zumindest zwei unterschiedlichen Pfaden durch das Längsreckmodul (100; 200) zu führen.

8. Längsreckanlage (10) nach einem der Ansprüche 1 bis 7, wobei
das erste und/oder zweite Längsreckmodul (100; 200) zumindest einen Versorgungsanschluss (160; 260) umfasst, und wobei die Längsreckmodulaufnahme (20) zumindest einen komplementären Versorgungsanschluss (60) umfasst, welcher mit dem Versorgungsanschluss (160; 260) koppelbar ist, wenn das Längsreckmodul (100; 200) in der Längsreckmodulaufnahme (20) aufgenommen ist, und wobei
der Versorgungsanschluss (160; 260) dazu eingerichtet ist, das Längsreckmodul (100, 200) mit Luft, Wasser, Öl, elektrischer Energie und/oder mechanischer Energie zu versorgen und/oder eine Datenkommunikation zu ermöglichen.

9. Längsreckanlage (10) nach einem der Ansprüche 1 bis 8, wobei das erste und/oder zweite Längsreckmodul (100; 200) zumindest ein Zentrierungselement umfasst, und wobei
die Längsreckmodulaufnahme zumindest ein komplementäres Zentrierungselement umfasst, wobei
das Zentrierungselement und das komplementäre Zentrierungselement zusammengreifen, wenn das Längsreckmodul (100; 200) in der Längsreckmodulaufnahme (20) aufgenommen ist, um eine Position und/oder Orientierung des Längsreckmoduls (100; 200) festzulegen.

10. Längsreckanlage (10) nach einem der Ansprüche 1 bis 9, weiterhin umfassend einen Vorheizbereich (12), der dem Reckbereich (13) vorgelagert ist und/oder einen Kühlbereich (14), der dem Reckbereich (13) nachgelagert ist.

11. Längsreckanlage (10) nach einem der Ansprüche 1 bis 10, weiterhin umfassend eine Einzugskette (70), welche zum Einziehen der Kunststofffolie (A) in die Längsreckanlage (10) eingerichtet ist, wobei
die Längsreckanlage (10) optional zumindest einen Kettengreifer (72, 74) umfasst, welcher dem Reckbereich (13) vorgelagert und/oder nachgelagert ist, und wobei
der zumindest eine Kettengreifer (72, 74) dazu eingerichtet ist, die Einzugskette (70) derart zu greifen, dass eine Bewegung der Einzugskette (70) in einer Richtung, die von dem Reckbereich (13) weg weist blockiert ist.

12. Längsreckanlage (10) nach einem der Ansprüche 1 bis 11, wobei das erste und/oder zweite Längsreckmodul eine austauschbare Verschleißbaugruppe (180) umfasst, wobei die Verschleißbaugruppe (180) zumindest zwei Walzen, insbesondere Reckwalzen (112, 114), umfasst.

13. Längsreckanlage (10) nach einem der Ansprüche 1 bis 12, wobei die Längsreckanlage (10) weiterhin zumindest eine Längsreckmodullageraufnahme (22) und/oder zumindest eine Verschleißbaugruppenlageraufnahme (28) umfasst, wobei
die zumindest eine Längsreckmodullageraufnahme (22) dazu eingerichtet ist, ein nicht in die Längsreckmodulaufnahme (20) aufgenommenes Längsreckmodul zwischenzulagern und optional zu temperieren, und wobei
die zumindest eine Verschleißbaugruppenlageraufnahme dazu eingerichtet ist, eine Verschleißbaugruppe (180) vorzuhalten und optional zu temperieren.

14. Anlage (1) zur Herstellung einer Kunststofffolie (A), wobei die Anlage (1) eine Längsreckanlage (10) nach einem der Ansprüche 1 bis 13 umfasst, sowie eine Extrusionsanlage (2), eine Casting-Unit (3) und/oder eine Querreckanlage (4).

15. Verfahren (1000) zum Verstrecken einer Kunststofffolie (A) in Längsrichtung (M), wobei das Verfahren die folgenden Schritte umfasst
Einsetzen (1100) eines Längsreckmoduls (100; 200) in eine Längsreckmodulaufnahme (20) einer Längsreckanlage (10) nach einem der Ansprüche 1 bis 13;
Einführen (1200) einer extrudierten Kunststofffolie (A) in die Längsreckanlage (10), und
Verstrecken (1300) der Kunststofffolie (A) in Längsrichtung (M) mittels des eingesetzten Längsreckmoduls (100; 200).
